# FASCICULE DE BREVET EUROPEEN

(11) **EP 4 497 961 B1**
(45) Date de publication et mention de la délivrance du brevet: **21.01.2026**
(21) Numéro de dépôt: 24190624.7
(22) Date de dépôt: 24.07.2024
(51) Int. Cl.: F16D 43/202, F16D 7/04

(54) **LIMITEUR DE COUPLE, ENSEMBLE DE TRANSMISSION ET UTILISATION CORRESPONDANTE**
DREHMOMENTBEGRENZER, ÜBERTRAGUNGSANORDNUNG UND VERWENDUNG DAVON
TORQUE LIMITER, TRANSMISSION ASSEMBLY AND USE THEREOF

(30) Priorité: 26.07.2023 FR 2308177
(43) Date de publication de la demande: 29.01.2025
(73) Titulaire: Compagnie Engrenages et Reducteurs-Messian-Durand, 59400 Cambrai (FR)
(72) Inventeur: LESSARD, Fabrice, 59400 CAMBRAI (FR)
(74) Mandataire: Lavoix

(56) Documents cités:
- IT-A1- 201900 006 296
- US-A- 1 126 219
- US-A- 2 723 014

## Description

La présente invention concerne un limiteur de couple, du type comportant un premier corps, et un second corps, le premier corps et le second corps s'étendant autour d'un axe central, le premier corps portant une première denture de limiteur, le second corps portant une seconde denture de limiteur, complémentaire de la première denture de limiteur, les première denture de limiteur et seconde denture de limiteur définissant une configuration engagée dans laquelle les première denture de limiteur et seconde denture de limiteur sont adaptées pour transmettre un couple de rotation autour de l'axe central du premier corps au second corps et une configuration de libération, dans laquelle les première denture de limiteur et seconde denture de limiteur sont inaptes à transmettre un couple de rotation entre le premier corps et le second corps, le limiteur de couple comprenant également des moyens de blocage adaptés pour s'opposer à une transition de la première denture de limiteur et de la seconde denture de limiteur de leur configuration de libération vers leur configuration engagée, et des moyens de maintien de limitation adaptés pour maintenir la première denture de limiteur et la seconde denture de limiteur dans leur configuration engagée lorsque le couple de rotation est inférieur à un couple de transmission limite et adaptés pour céder lorsque le couple de rotation dépasse le couple de transmission limite.

On connait des limiteurs de couple adaptés pour limiter le couple transmis entre un arbre menant et un arbre mené. Un limiteur de couple est par exemple connu du US9086096B2. Ce limiteur de couple comprend des pistons radialement mobiles par rapport à l'axe central des arbres menant et mené. Ces pistons sont sollicités par des ressort radialement vers l'intérieur.

Un autre limiteur de couple est commercialisé par la société Ringspann ^{®} sous la dénomination « SIKUMAT » ^{®} SU. Ce limiteur de couple comprend des billes disposées dans des logements axiaux et casées en butée par des ressorts Belleville. Lorsque le couple limite est atteint, les billes glissent hors de leur logement et roulent jusqu'au logement suivant, en répétant ce processus jusqu'à ce que le couple passe en dessous du couple limite. D'autres limiteurs de couple sont connus des documents US 2 723 014 A, US 1 126 219 A et IT 2019 0000 6296 A1.

Ces limiteurs de couple sont relativement complexes et donc couteux. De plus, ces limiteurs de couple ont des forces limites de transmission relativement faibles pour des dimensions données.

L'invention a pour but de proposer un limiteur de couple qui soit de construction simple et qui permette de transmettre un couple limite élevé pour des dimensions données. Un autre but de l'invention est de proposer un limiteur de couple qui permette de régler le couple limite avec des moyens faibles et de préférence avec une tolérance faible.

A cet effet, l'invention a pour objet un limiteur de couple tel qu'indiqué ci-dessus caractérisé en ce que les moyens de maintien de limitation comprennent au moins un élément de maintien de limitation intérieur ayant une surface de contact extérieure, et au moins un élément de maintien de limitation extérieur ayant une surface de contact intérieure complémentaire de la surface de contact extérieure, les éléments de maintien de limitation intérieur et extérieur ayant une configuration de maintien, dans laquelle l'élément de maintien de limitation intérieur est serré dans l'élément de maintien de limitation extérieur, et une configuration cédée dans laquelle l'élément de maintien de limitation intérieur est desserré de l'élément de maintien de limitation extérieur.

Selon des modes de réalisation particuliers du limiteur de couple, celui-ci peut comporter l'une ou plusieurs des caractéristiques suivantes :
- la surface de contact extérieure est de forme tronconique de révolution et dans lequel surface de contact intérieure est de forme tronconique de révolution, notamment dans lequel l'angle d'ouverture (α) des surfaces de contact extérieure et intérieure est compris entre 1° et 20° ;
- les moyens de maintien de limitation comprennent au moins une cartouche, chaque cartouche comprenant un de l'au moins un élément de maintien de limitation extérieur et un de l'au moins élément de maintien de limitation intérieur,
   l'élément de maintien de limitation extérieur est un manchon, et
   l'élément de maintien de limitation intérieur est un poinçon muni d'un piston, en particulier le piston étant adapté pour s'étendre à travers une ouverture du couvercle à ouverture de la cartouche ;
- lorsque l'élément de maintien de limitation intérieur et l'élément de maintien de limitation extérieur sont dans la configuration cédée, l'élément de maintien de limitation intérieur est décalé selon l'axe central relatif à l'élément de maintien de limitation extérieur par rapport à leur configuration de maintien ;
- dans leur configuration engagée, la première denture et la seconde denture s'appliquent l'une sur l'autre ;
- le limiteur de couple comprend
   - une première bride d'accouplement fixée au premier corps et munie d'une première denture d'accouplement, et
   - une seconde bride d'accouplement fixée au second corps et munie d'une seconde denture d'accouplement, et
      la première denture d'accouplement est adaptée pour coopérer avec une denture d'accouplement complémentaire, et
      la seconde denture d'accouplement est adaptée pour coopérer avec une denture d'accouplement complémentaire ;
- soit la seconde denture de limiteur est fixe par rapport au second corps, soit la seconde denture de limiteur comprend des inserts de denture axialement mobiles par rapport au second corps entre la configuration engagée et la configuration de libération ; et
- le second corps comprend deux pièces de corps axialement mobiles l'une par rapport à l'autre et fixes en rotation l'une de l'autre autour de l'axe central.

L'invention a également pour objet un ensemble de transmission, du type comprenant un arbre meneur, un arbre mené, et un limiteur de couple, caractérisé en ce que le limiteur de couple est un limiteur de couple tel que défini ci-dessus, en ce que le premier corps est fixé en rotation à l'arbre meneur, et le second corps est fixé en rotation à l'arbre mené.

Selon des modes de réalisation particuliers de l'ensemble de transmission, celui-ci peut comporter l'une ou plusieurs des caractéristiques suivantes :
l'arbre meneur comprend une denture d'accouplement complémentaire et l'arbre mené comprend une denture d'accouplement complémentaire et le limiteur de couple est un limiteur de couple tel que défini ci-dessus.

L'invention a également pour objet une utilisation d'un ensemble de transmission tel que défini ci-dessus, comprenant les étapes successives suivantes :
fourniture de l'ensemble de transmission, les éléments de maintien de limitation intérieur et extérieur étant dans leur configuration cédée ; et
mise des éléments de maintien de limitation intérieur et extérieur dans leur configuration de maintien en appliquant la surface de contact extérieure sur la surface de contact intérieure, en serrant l'élément de maintien de limitation intérieur dans l'élément de maintien de limitation extérieur.

Selon des modes de réalisation particuliers de l'utilisation de l'ensemble de transmission, celle-ci peut comporter l'une ou plusieurs des caractéristiques suivantes :
l'utilisation comprend en outre les étapes successives suivantes, mises en oeuvre après l'étape de mise des éléments de maintien de limitation intérieur et extérieur dans leur configuration de maintien :
- dépassement du couple de transmission limite, ainsi causant la mise en configuration de libération des première denture de limiteur et seconde denture de limiteur,
- re-enclenchement du limiteur de couple par une mise des éléments de maintien de limitation intérieur et extérieur dans leur configuration de maintien en appliquant la surface de contact extérieure sur la surface de contact intérieure, ainsi serrant l'élément de maintien de limitation intérieur dans l'élément de maintien de limitation extérieur.

L'invention sera mieux comprise à la lecture de la description qui va suivre, donnée uniquement à titre d'exemple et faite en se référant aux dessins annexés, sur lesquels :
[Fig 1] La Figure 1 montre une vue schématique d'une installation comprenant un ensemble de transmission selon un premier mode de réalisation de l'invention muni d'un limiteur de couple, le limiteur de couple étant dans une configuration engagée ;
[Fig 2] La Figure 2 montre l'installation de la Figure 1, le limiteur de couple étant dans une configuration de libération ;
[Fig 3] La Figure 3 montre une vue radiale d'une partie du limiteur de couple de la Figure 1 ;
[Fig 4] La Figure 4 montre la vue radiale d'une partie du limiteur de couple de la Figure 2, la vue correspondant à celle de la Figure 3 ;
[Fig 5] La Figure 5 montre schématiquement un ensemble de transmission selon un deuxième mode de réalisation de l'invention, le limiteur de couple étant dans la configuration engagée;
[Fig 6] La Figure 6 montre schématiquement un ensemble de transmission selon un troisième mode de réalisation de l'invention, le limiteur de couple étant dans la configuration de libération; et
[Fig 7] La Figure 7 montre schématiquement un ensemble de transmission selon un quatrième mode de réalisation de l'invention, le limiteur de couple étant dans la configuration engagée ;
[Fig 8] La Figure 8 montre l'ensemble de transmission de la Figure 7, le limiteur de couple étant dans la configuration de libération;
[Fig 9] La Figure 9 montre une vue radiale d'une partie du limiteur de couple de la Figure 7 ;
[Fig 10] La Figure 10 montre la vue radiale d'une partie du limiteur de couple de la Figure 8, la vue correspondant à celle de la Figure 9.

Dans ce qui suit, le terme « fixé » ou « fixe » sans autre précision est utilisé pour désigner une liaison sans aucun degré de liberté. Le terme « fixé » ou « fixe » avec l'indication du degré de liberté concerné est utilisé pour désigner généralement une liaison fixe concernant le degré de liberté indiqué et libre ou non concernant les autres degrés de liberté. La personne du métier sait supprimer les degrés de liberté afin d'arriver à un dispositif ayant les degrés de liberté nécessaires.

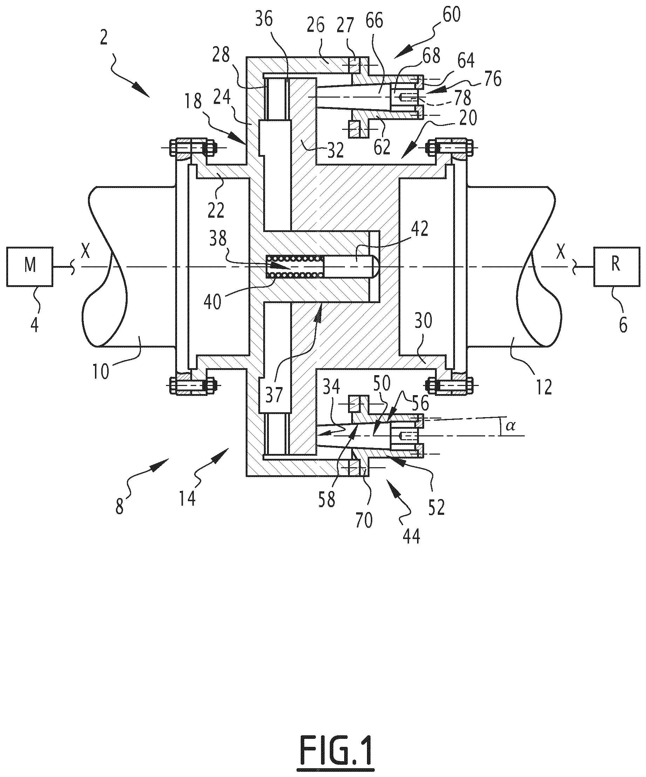

La Figure 1 montre une vue schématique d'une installation selon l'invention désignée par la référence générale 2. L'installation 2 comprend un dispositif entrainant 4, tel qu'un moteur M, et un dispositif entrainé 6, tel qu'un réducteur R ou un broyeur. L'installation 2 comprend un ensemble de transmission 8 selon l'invention reliant le dispositif entrainant 4 au dispositif entrainé 6 en vue de son entrainement.

L'ensemble de transmission 8 comprend un arbre meneur 10, un arbre mené 12, et un limiteur de couple 14 reliant l'arbre meneur 10 à l'arbre mené 12. L'arbre meneur 10 est par exemple l'arbre de sortie du dispositif entrainant 4 et l'arbre mené 12 est par exemple l'arbre d'entrée du dispositif entrainé 6. L'arbre meneur 10 est dans le cas présent un arbre axialement fixe, tandis que l'arbre mené 12 est un arbre axialement mobile.

Le limiteur de couple 14 est adapté pour transmettre un couple de rotation de l'arbre meneur 10 à l'arbre mené 12 lorsque le couple de rotation est inférieur à un couple de transmission limite. Le limiteur de couple 14 est adapté pour céder lorsque le couple de rotation atteint ou dépasse le couple de transmission limite et ainsi pour permettre une libre rotation de l'arbre meneur 10 par rapport à l'arbre mené 12 lorsque le couple de rotation atteint ou dépasse ce couple de transmission limite.

Le limiteur de couple 14 définit un axe central X-X, qui est en l'occurrence coaxial à l'arbre meneur 10 et à l'arbre mené 12. Sauf indication contraire, les expressions « axial », « radial » et « circonférentiel » sont utilisées par rapport à cet axe central X-X.

Le limiteur de couple 14 est muni d'un premier corps 18 et d'un second corps 20, le premier corps et le second corps s'étendant autour de l'axe central X-X et étant centrés sur cet axe central X-X.

Le premier corps 18 est en l'occurrence un corps axialement fixe. Le premier corps 18 est fixé axialement, radialement et circonférentiellement à l'arbre meneur 10.

Le second corps 20 est en l'occurrence un corps axialement mobile. Le second corps 20 est fixé axialement, radialement et circonférentiellement à l'arbre mené 12. L'arbre mené 12, et donc le second corps 20, est axialement mobile par rapport à l'arbre meneur 10 et par rapport au premier corps 18.

De manière générale les termes « corps axialement fixe » et « corps axialement mobile » signifient dans le cadre de la présente invention que la mobilité axiale du corps axialement mobile est supérieure à la mobilité axiale du corps axialement fixe afin de permettre la prise de la configuration de libération (voir ci-après). Cette mobilité axiale peut être obtenue par différents moyens techniques.

Le premier corps 18 comprend dans le cas présent une première bride de fixation 22 à l'arbre menant 10, un premier flasque de liaison 24, une jupe extérieure 26, et un anneau de support 27. Le premier flasque de liaison 24 est axialement disposé entre la première bride de liaison 22 et la jupe extérieure 26. L'anneau de support 27 est fixé à la jupe extérieure 26. La forme du premier corps 18 peut varier de la forme de ce premier mode de réalisation.

Le premier corps 18 porte une première denture de limiteur 28, en l'occurrence une denture axiale, et en l'occurrence fixée au premier flasque de liaison 24.

Le second corps 20 comprend dans le cas présent une seconde bride de fixation 30 à l'arbre mené 12, un second flasque de liaison 32 et une surface de poussée 34.

Le second corps 20 porte une seconde denture de limiteur 36, en l'occurrence une denture axiale, et en l'occurrence fixée au second flasque de liaison 32. En l'occurrence, les première et seconde dentures de limiteur 28, 36 forment chacune une couronne dentée dont les dents font axialement saillie. La première denture de limiteur 28, respectivement la seconde denture de limiteur 36 peut être d'un seul tenant avec le premier corps 18, respectivement avec le second corps 20 ou être une ou plusieurs pièces distinctes.

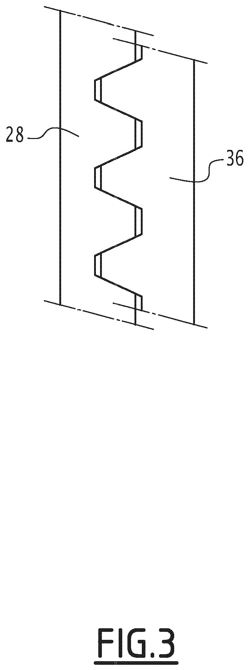

La seconde denture de limiteur 36 est complémentaire de la première denture de limiteur 28. Les première denture de limiteur 28 et seconde denture de limiteur 36 définissent une configuration engagée (Figure 1) dans laquelle les première denture de limiteur 28 et seconde denture de limiteur 36 sont adaptées pour transmettre un couple de rotation autour de l'axe central X-X du premier corps 18 au second corps 20. Dans cette configuration engagée, lors d'une rotation du premier corps 18 autour de l'axe central X-X, les première denture de limiteur 28 et seconde denture de limiteur 36 transmettent le couple de rotation autour de l'axe central X-X du premier corps 18 au second corps 20. Cette configuration est représentée sur les Figures 1 et 3.

Dans la configuration engagée, la première denture de limiteur 28 et la seconde denture de limiteur 36 s'appliquent l'une sur l'autre, c'est-à-dire, sans interposition de corps de limitation. Dans la configuration engagée, la surface de la première denture de limiteur 28 est donc en contact avec la surface de la seconde denture de limiteur 36.

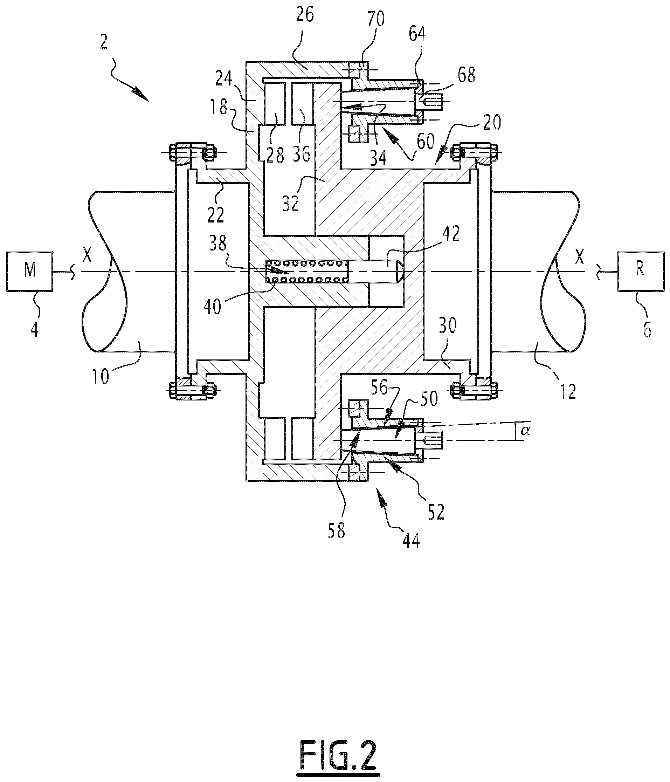

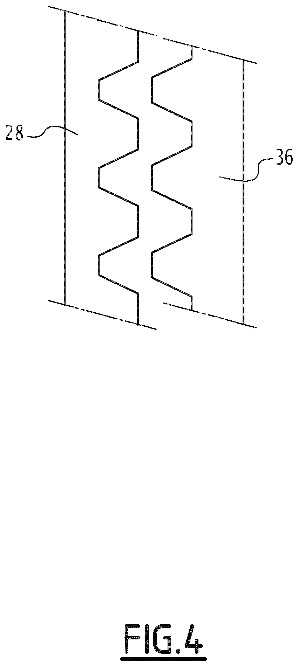

Les première denture de limiteur 28 et seconde denture de limiteur 36 définissent une configuration de libération, dans laquelle ces première denture de limiteur 28 et seconde denture de limiteur 36 sont inaptes pour transmettre un couple de rotation entre le premier corps et le second corps et rendent donc le premier corps 18 et le second corps 20 libre en rotation l'un par rapport à l'autre. Dans cette configuration de libération, les première et seconde dentures de limiteur 28, 36 sont axialement écartées et espacées l'une de l'autre. Cette configuration de libération est représentée sur les Figures 2 et 4.

Les première et seconde dentures de limiteur 28, 36 sont adaptées pour générer une force axiale sollicitant le premier corps 18 et le second corps 20 de leur configuration engagée vers leur configuration de libération sous l'effet du couple de rotation transmis. A cet effet, les flancs des dents des première et seconde dentures de limiteur 28, 36 sont par exemple obliques par rapport à tous les plans comprenant l'axe central X-X. En l'occurrence, lorsqu'un couple de rotation est transmis, la seconde denture de limiteur 36 est sollicitée vers la droite sur la Figure 1.

Le premier corps 18 et le second corps 20 définissent, dans le mode de réalisation présent, une configuration engagée respectivement une configuration de libération qui correspondent à la configuration engagée respectivement à la configuration de libération des première et seconde dentures 28, 36.

Le limiteur de couple 14 comprend en outre des moyens de guidage 37 adaptés pour guider, et notamment guidant, le premier corps 18 par rapport au second corps 20 en rotation autour de l'axe central X-X lorsque les première denture de limiteur 28 et seconde denture de limiteur 36 sont dans leur configuration de libération.

Dans le cas présent, les moyens de guidage 37 sont également adaptés pour guider le premier corps 18 par rapport au second corps 20 axialement le long de l'axe central X-X et en rotation autour de l'axe central X-X lorsque le premier corps 18 et le second corps 20 sont dans leur configuration de libération. En l'occurrence, ces moyens de guidage 37 sont schématiquement représentés comme des surfaces de palier complémentaires cylindriques à section circulaire. Ces moyens de guidage 37 ont en l'occurrence une liberté axiale et permettent un décalage du premier corps 18 rapport au second corps 20 entre leur configuration de libération et leur configuration engagée.

Le limiteur de couple 14 comprend par ailleurs des moyens de blocage 38 adaptés pour s'opposer à une transition de la première denture de limiteur 28 et de la seconde denture de limiteur 36 de leur configuration de libération vers leur configuration engagée. Les moyens de blocage 38 sont libérables.

En l'occurrence, ces moyens de blocage 38 sont adaptés pour s'opposer à la transition du premier corps 18 et du second corps 20 de leur configuration de libération vers leur configuration engagée.

Ces moyens de blocage 38 s'opposent à une prise intempestive de la configuration engagée de la première denture de limiteur 28 et de la seconde denture de limiteur 36, et donc en l'occurrence du premier corps 18 et du second corps 20.

En l'occurrence, les moyens de blocage 38 comprennent des moyens de sollicitation du premier corps 18 et du second corps 20 de leur configuration engagée dans leur configuration de libération. Ces moyens de sollicitation comprennent par exemple un ressort 40, notamment disposé dans un alésage du premier corps 18, poussant le premier corps et le second corps 20 axialement à l'écart l'un de l'autre, en l'occurrence via un cylindre de poussée 42.

En variante non représentée, les moyens de blocage 38 peuvent comprendre d'autres éléments de blocage, tels que des billes de blocage soumises à des ressorts de poussée, s'engageant dans des creux, ou encore des aimants coopérant avec des parties ferromagnétiques.

Le limiteur de couple 14 comprend par ailleurs des moyens de maintien de limitation 44 pour maintenir la première denture de limiteur 28 et la seconde denture de limiteur 36 dans leur configuration engagée lorsque le couple de rotation est inférieur à un couple de transmission limite et adaptés pour céder lorsque le couple de rotation dépasse le couple de transmission limite. En l'occurrence, ces moyens de maintien de limitation 44 sont adaptés pour maintenir le premier corps 18 et le second corps 20 dans leur configuration engagée lorsque le couple de rotation est inférieur au couple de transmission limite et ceci à l'encontre de la force axiale générée par les première denture de limiteur 28 et seconde denture de limiteur 36. Eventuellement, ces moyens de maintien de limitation 44 sont en plus adaptés pour maintenir le premier corps 18 et le second corps 20 dans leur configuration engagée à l'encontre de la force des moyens de blocage 38, bien que cette force soit généralement négligeable. Les moyens de maintien de limitation 44 sont adaptés pour céder, et cèdent, lorsque le couple de rotation atteint ou dépasse le couple de transmission limite. Les moyens de maintien de limitation 44 définissent donc une force de cession qui correspond à la force axiale générée par les première denture de limiteur 28 et seconde denture de limiteur 36 lorsque le couple de transmission limite est atteint ou dépassé. Le cas échéant, la force de cession correspond en plus à la force axiale des moyens de blocage 38.

Les moyens de maintien de limitation 44 comprennent au moins un élément de maintien de limitation intérieur 50 et au moins un élément de maintien de limitation extérieur 52, complémentaire de l'élément de maintien de limitation intérieur 50.

Dans ce qui suit, un jeu d'éléments de maintien constitué d'un seul élément de maintien de limitation intérieur 50 et d'un seul élément de maintien de limitation extérieur 52 sera décrit.

L'élément de maintien de limitation intérieur 50 a une surface de contact extérieure 56 et l'élément de maintien de limitation extérieur 52 a une surface de contact intérieure 58 complémentaire de la surface de contact extérieure 56.

L'élément de maintien de limitation intérieur 50 est donc un élément mâle et l'élément de maintien de limitation extérieur 52 est un élément femelle.

Les éléments de maintien de limitation intérieur 50 et extérieur 52 ont une configuration de maintien, dans laquelle l'élément de maintien de limitation intérieur 50 est serré, notamment par frottement, dans l'élément de maintien de limitation extérieur 52 (Figure 1) et une configuration cédée dans laquelle l'élément de maintien de limitation intérieur 50 est desserré de l'élément de maintien de limitation extérieur (Figure 2).

Tous les éléments de maintien de limitation intérieur 50 et éléments de maintien de limitation extérieur 52 définissent, par leur configuration de maintien, la force de cession.

Dans la configuration de maintien, l'élément de maintien de limitation extérieur 52 est uniquement élastiquement déformée par rapport à la configuration cédée.

Les éléments de maintien de limitation intérieur 50 et extérieur 52 sont adaptés pour prendre la configuration de maintien et la configuration cédée de manière réversible.

L'élément de maintien de limitation intérieur 50 est de préférence en acier, notamment en acier hautement allié. L'élément de maintien de limitation extérieur 52 est de préférence en acier, notamment en acier hautement allié. L'élément de maintien de limitation intérieur 50 et l'élément de maintien de limitation extérieur 52 peut avoir subi un traitement de surface, comme la nitruration ou cémentation.

Sur les Figures 1 et 2, deux jeux d'éléments de maintien et donc deux éléments de maintien de limitation intérieur 50 et deux éléments de maintien de limitation extérieur 52 sont représentés. Le nombre des éléments de maintien de limitation intérieur 50 et des éléments de maintien de limitation extérieur 52 est fonction du couple de transmission limite requis et de la capacité de force de transmission maximale de chaque jeu d'éléments de maintien.

Généralement, le nombre de jeux d'éléments de maintien, peut être compris entre 6 et 36, en particulier entre 8 et 24.

En l'occurrence et de préférence, la surface de contact extérieure 56 est de forme tronconique de révolution. De même, la surface de contact intérieure 58 est de forme tronconique de révolution. Ces troncs de cône s'étendent selon un axe de cône A-A qui s'étend parallèlement à l'axe central X-X.

L'angle d'ouverture α des surfaces de contact extérieure 56 et intérieure 58 est compris entre 1° et 20°, et de préférence entre 2° et 10°. L'angle d'ouverture α est mesuré par rapport à l'axe de cône A-A. Les angles d'ouverture α des surfaces de contact extérieure et intérieure sont de préférence identiques. Les surfaces de contact extérieure 56 et intérieure 58 s'évasent selon le sens allant de la configuration engagée vers la configuration de libération (vers la droite sur la Figure 1).

Dans la configuration de maintien, l'élément de maintien de limitation intérieur 50 est maintenu dans l'élément de maintien de limitation extérieur 52 par frottement statique. En d'autres termes, dans la configuration de maintien, ce frottement statique s'oppose à la prise de la configuration cédée.

Lorsque l'élément de maintien de limitation extérieur 52 commence à céder, le contact avec l'élément de maintien de limitation intérieur 50 se transforme en un contact à frottement glissant, et donc ayant un coefficient de frottement inférieur au coefficient de frottement statique, combiné à une diminution de la pression exercée sur l'élément de maintien de limitation intérieur 50. En conséquence, une fois l'élément de maintien de limitation extérieur 52 commence à céder, le processus de cession s'autoalimente.

L'élément de maintien de limitation intérieur 50 et l'élément de maintien de limitation extérieur 52 sont adaptés pour prendre la configuration de maintien et la configuration cédée de manière réversible.

Ainsi, le limiteur de couple 14 est re-enclenchable, ré-armable ou ré-engageable.

Avantageusement, les moyens de maintien de limitation 44 comprennent au moins une cartouche 60. Chaque cartouche 60 comprend un des éléments de maintien de limitation intérieur 50 et un des éléments de maintien de limitation extérieur 52. En l'occurrence, la cartouche 60 est munie d'un seul élément de maintien de limitation intérieur 50 et d'un seul élément de maintien de limitation extérieur 52. L'élément de maintien de limitation extérieur 52 est un manchon 62. La cartouche 60 est munie d'un couvercle à ouverture 64. L'élément de maintien de limitation intérieur 50 est un poinçon 66 muni d'un piston 68 qui est avantageusement adapté pour s'étendre, et notamment qui s'étend au moins dans la configuration cédée, à travers l'ouverture du couvercle à ouverture 64.

La cartouche 60 est par ailleurs avantageusement munie d'une bride de fixation 70 de la cartouche 60 au premier corps 18, et plus précisément à l'anneau de support 27.

Lorsque l'élément de maintien de limitation intérieur 50 et l'élément de maintien de limitation extérieur 52 sont dans la configuration cédée (Figure 2), l'élément de maintien de limitation intérieur 50 est décalé selon l'axe central X-X relatif à l'élément de maintien de limitation extérieur 52 par rapport à leur configuration de maintien (Figure 1). L'élément de maintien de limitation intérieur 50 et l'élément de maintien de limitation extérieur 52 définissent ensemble une direction de cession, qui est parallèlement à l'ace central X-X.

Avantageusement, lorsque l'élément de maintien de limitation intérieur 50 et l'élément de maintien de limitation extérieur 52 sont dans la configuration cédée (Figure 2), le piston 68 dépasse du couvercle à ouverture 64. Avantageusement, lorsque l'élément de maintien de limitation intérieur 50 et l'élément de maintien de limitation extérieur 52 sont dans la configuration de maintien (Figure 1), le piston 62 est rétracté dans le couvercle à ouverture 64.

Avantageusement, lorsque l'élément de maintien de limitation intérieur 50 et l'élément de maintien de limitation extérieur 52 sont dans la configuration cédée (Figure 2), la surface de contact extérieure 56 et la surface de contact intérieure 58 sont écartées l'une de l'autre.

A l'état non monté de la cartouche 60, c'est-à-dire en l'absence du premier corps 18, la cartouche 60 peut être manipulée d'un seul bloc, sans que l'élément de maintien de limitation intérieur 50 et l'élément de maintien de limitation extérieur 52 se désolidarisent entièrement. Ainsi, la cartouche 60 est un module qui est livrable d'une manière préassemblée.

Le limiteur ce couple 14 peut également être muni de moyens de déclenchement 76 adaptés pour amener les éléments de maintien de limitation intérieur 50 et les éléments de maintien de limitation extérieur 52 de leur configuration de maintien dans leur configuration cédée, lorsque le limiteur de couple 14 est à l'arrêt. Ces moyens de déclenchement 76 sont adaptés pour permettre un déplacement, en l'occurrence par traction, de l'élément de maintien de limitation intérieur 50 vers la configuration cédée. Ces moyens de déclenchement 76 comprennent par exemple un taraudage 78 ménagé dans l'élément de maintien de limitation intérieur 50 dans lequel peut s'engager un élément de traction. Ainsi le limiteur de couple 14 est facile à entretenir.

Le limiteur de couple 14 selon l'invention fonctionne de la manière suivante.

On part de la situation montrée sur la Figure 2, c'est-à-dire les première et seconde dentures de limiteur 28,36 se trouvent dans leur configuration de libération. Tous les éléments de maintien de limitation intérieur 50 et extérieur 52 sont donc dans leur configuration cédée.

Les éléments de maintien de limitation intérieur et extérieur sont mis dans leur configuration de maintien. Ainsi, chaque élément de maintien de limitation intérieur 50 est poussé de sorte que cet élément de maintien de limitation intérieur 50 est serré dans l'élément de maintien de limitation extérieur 52 associé. A cette occasion, la surface de contact extérieure entre en contact avec la surface de contact intérieure et s'applique sur celle-ci.

A cette occasion, la première denture de limiteur 28 et la seconde denture de limiteur 36 sont axialement approchées l'une de l'autre jusqu'à ce que la première denture de limiteur 28 et la seconde denture de limiteur 36 se trouvent dans leur configuration engagée. En l'occurrence, le premier corps 18 et le second corps 20 sont axialement approchés l'un de l'autre jusqu'à ce qu'ils se trouvent dans la configuration engagée.

Le rapprochement de la première denture de limiteur 28 de la seconde denture de limiteur 36 est effectué en franchissant les moyens de blocage 38, et en l'occurrence à l'encontre de la force exercée par les moyens de sollicitation.

En l'occurrence, une force axiale définie est appliquée sur le piston 68 vers la première denture de limiteur 28. La force axiale définie est telle que la force axiale de retenue de tous les éléments de maintien de limitation intérieur 50 et extérieur 52 combinée correspond à la force axiale générée par les première et seconde dentures de limiteur 28, 36 lors de la limite de l'atteinte de la transmission du couple de transmission limite, le cas échéant y inclus de la force des moyens de sollicitation. Cette force axiale de retenue de tous les éléments de maintien de limitation intérieur 50 et extérieur 52 combinée est donc identique à la force de cession.

Le limiteur de couple 14 prend alors la configuration engagée montrée sur la Figure 1.

Ensuite, l'arbre meneur 10 est entraîné en rotation autour de l'axe central X-X et entraine en rotation, via le limiteur de couple 14, l'arbre mené 12.

Lors de l'atteinte ou d'un dépassement du couple de transmission limite, la force axiale de réaction de la première denture de limiteur 28 et de la seconde denture de limiteur 36 fait céder tous les éléments de maintien extérieur 52, qui libèrent axialement les éléments de maintien intérieur 50. Cette libération axiale a lieu en franchissant la force de frottement statique entre les éléments de maintien intérieur 50 et les éléments de maintien extérieur 52.

La seconde denture de limiteur 36 se déplace axialement en s'éloignant de la première denture de limiteur 28. Les éléments de maintien intérieur 50 se déplacent également axialement en s'éloignant du premier corps 18. En l'occurrence, le second corps 20 se déplace axialement en s'éloignant du premier corps 18, sous l'effet de la force axiale de réaction des première et seconde dentures de limiteur 28, 36. Dans le cas présent, ce déplacement est favorisé par la force des moyens de sollicitation (ressort 40).

Le second corps 20 et les éléments de maintien intérieur 50 et extérieur 52 prennent la configuration montrée sur la Figure 2. Dans cette configuration, les moyens de blocage 38 s'opposent à un déplacement de la seconde denture de limiteur 36 vers la première denture de limiteur 28 et leur prise de la configuration engagée.

L'arbre menant 10 peut ainsi tourner librement autour de l'arbre mené 12 et un endommagement du dispositif entraîné 6, situé en aval du limiteur de couple 14 est empêché.

Le limiteur de couple 14 prend de nouveau la configuration montrée sur la Figure 2. Une fois le limiteur de couple 14 étant dans sa configuration de libération, les moyens de blocage 38 s'opposent à un déplacement de la seconde denture de limiteur 36 vers la première denture de limiteur 28 et leur prise de la configuration engagée.

Afin de ré-engager, réenclencher ou réarmer le limiteur de couple 14, les opérations décrites ci-dessus sont répétées jusqu'à ce que le limiteur de couple 14 prend de nouveau la configuration engagée montrée sur la Figure 1.

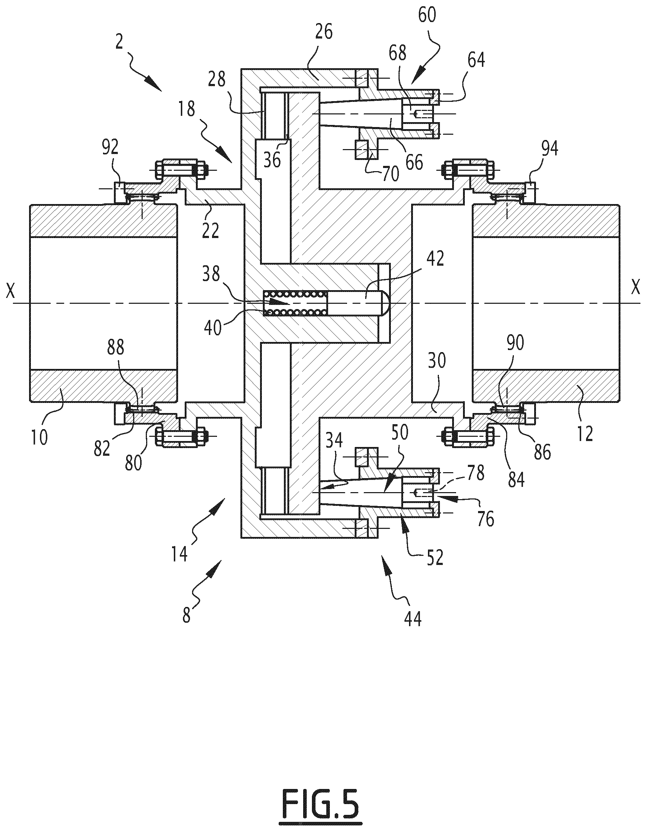

La Figure 5 montre schématiquement un ensemble de transmission 8 selon un deuxième mode de réalisation de l'invention, le limiteur de couple 14 étant dans sa configuration engagée, de manière similaire à la configuration montrée sur la Figure 1. Dans ce qui suit, uniquement les différences par rapport au premier mode de réalisation seront décrites. Les éléments analogues portent les mêmes références.

L'arbre mené 12 est un arbre qui est axialement fixe par rapport à l'arbre meneur 10.

Le limiteur de couple 14 comprend, d'une part, une première bride d'accouplement 80 munie d'une première denture d'accouplement 82 et fixée au premier corps 18 ainsi que, d'autre part, une seconde bride d'accouplement 84 munie d'une seconde denture d'accouplement 86 et fixée au second corps 20.

L'arbre meneur 10 est muni d'une denture d'accouplement complémentaire 88 qui coopère avec la première denture d'accouplement 82. La première denture d'accouplement 82 et la denture d'accouplement complémentaire 88 lient l'arbre meneur 10 au premier corps 18 de manière fixe en rotation autour de l'axe central X-X, mais libre en translation axiale et libre en rotation autour des axes de brisure s'étendant perpendiculairement à l'axe central X-X.

De même, l'arbre mené 12 est muni d'une denture d'accouplement complémentaire 90 qui coopère avec la seconde denture d'accouplement 86. La seconde denture d'accouplement 86 et la denture d'accouplement complémentaire 90 lient l'arbre mené 12 au second corps 20 de manière fixe en rotation autour de l'axe central, mais libre en translation axiale et libre en rotation autour des axes de brisure s'étendant perpendiculairement à l'axe central X-X.

Le limiteur de couple 14 comprend une butée axiale 92 limitant le déplacement axial du premier corps 18 unilatéralement par rapport à l'arbre meneur 10 vers le second corps 20. Le limiteur de couple 14 comprend une butée axiale 94 limitant le déplacement axial du second corps 20 unilatéralement par rapport à l'arbre mené 12 vers le premier corps 18.

Ce mode de réalisation autorise un décalage radial de l'arbre meneur 10 et de l'arbre mené 12.

Le dispositif de la Figure 5 fonctionne de la manière suivante.

Lors de l'atteinte ou le dépassement du couple de transmission limite, le second corps 20 se déplace axialement en s'éloignant du premier corps 18, sous l'effet de la force axiale de réaction des première et seconde dentures de limiteur 28, 36 comme lors du premier mode de réalisation, toutefois avec la différence, que les premières et secondes dentures d'accouplement 82, 86 et les dentures d'accouplement complémentaire 88, 90 permettent un déplacement axial du premier corps 18 et du second corps 20 par rapport à l'arbre menant 10 et par rapport à l'arbre mené 12.

La position axiale de l'arbre mené 12 par rapport à l'arbre menant 10 reste inchangée lors d'une prise de la configuration de libération depuis la configuration engagée.

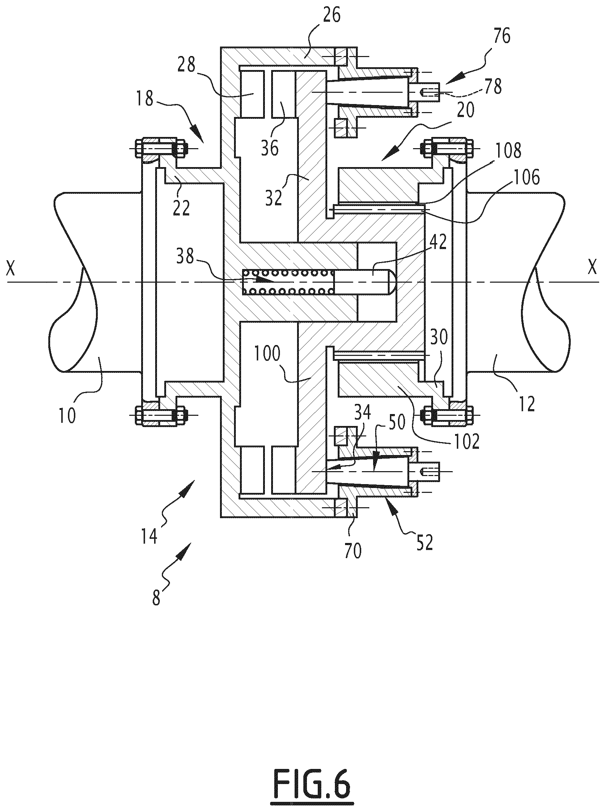

La Figure 6 montre schématiquement un ensemble de transmission selon un troisième mode de réalisation de l'invention, le limiteur de couple 14 étant dans la configuration de libération, de manière similaire à la configuration montrée sur la Figure 2. Dans ce qui suit, uniquement les différences par rapport au premier mode de réalisation seront décrites. Les éléments analogues portent les mêmes références.

L'arbre mené 12 est un arbre qui est axialement fixe par rapport à l'arbre meneur 10, de manière similaire au deuxième mode de réalisation.

Le second corps 20 comprend deux pièces de corps 100, 102 axialement mobiles l'une par rapport à l'autre et fixes en rotation l'une de l'autre autour de l'axe central X-X, en l'occurrence par des cannelures extérieures 106 qui coopèrent avec des cannelures intérieures 108.

La pièce de corps 100 comprend le flasque de liaison 32, la surface de poussée 34 et porte la seconde denture 36. La pièce de corps 100 comprend les cannelures extérieures 106. La pièce de corps 100 est par ailleurs en contact avec le cylindre de poussée 42.

La pièce de corps 102 forme la bride de fixation 30 et comprend les cannelures intérieures 108.

Lors du passage entre la configuration de libération et la configuration engagée, la pièce de corps 100 se déplace axialement par rapport à la pièce de corps 102, tandis que la pièce de corps 102 reste axialement immobile.

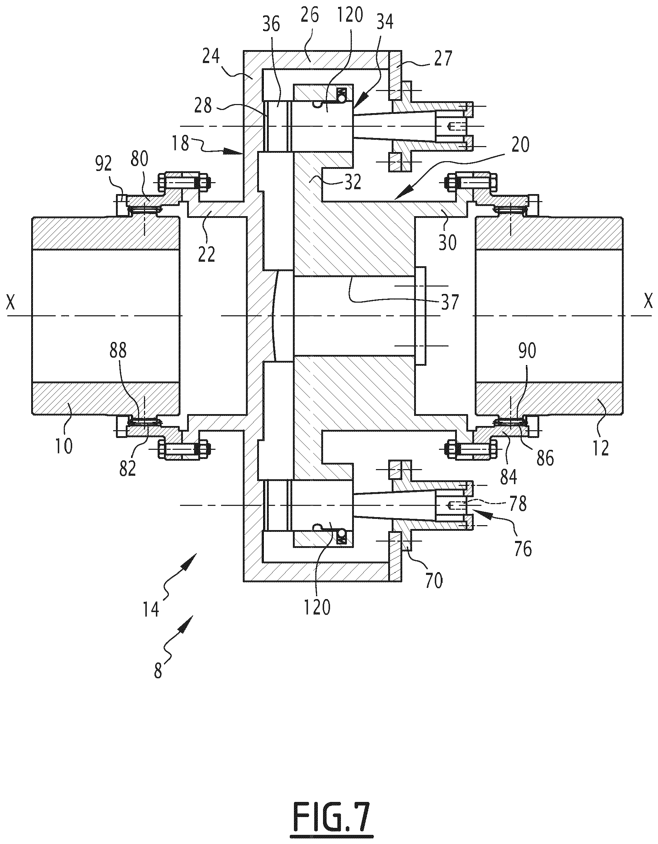

Sur les Figures 7 à 10 est montré un ensemble de transmission 8 selon un quatrième mode de réalisation. Dans ce qui suit, uniquement les différences ou particularités par rapport au second mode de réalisation (Figure 5) seront décrites. Les éléments analogues portent les mêmes références.

La Figure 7 montre schématiquement l'ensemble de transmission 8, le limiteur de couple 14 étant dans sa configuration engagée.

Les moyens de guidage 37 n'ont pas de degré de liberté axiale le long de l'axe central X-X et empêchent donc un décalage axial du premier corps 18 rapport au second corps 20 entre les configuration de libération et configuration engagée. La position axiale du premier corps 18 par rapport au second corps 20 dans les configuration de libération et configuration engagée est donc identique.

La seconde denture de limiteur 36 est portée par le second corps 20 et est axialement mobile par rapport au second corps 20. La seconde denture de limiteur 36 comprend des inserts de denture 120 disposés sur le second corps 20. Les inserts de denture 120 sont axialement mobiles par rapport au second corps 20 entre la configuration engagée et la configuration de libération.

A cet effet, en l'occurrence chaque insert de denture 120 comprend une surface de guidage cylindrique et le second corps 20 comprend une surface de guidage cylindrique complémentaire.

Chaque insert de denture 120 comprend en l'occurrence une seule dent 124. Chaque insert de denture 120 peut comprendre entre une et trois dents 124 inclus de sorte que le nombre de dents 124 de chaque insert de denture 120 est inférieur à quatre.

Chaque insert de denture 120 comprend une surface de poussée 34 sur laquelle s'applique l'un des éléments de maintien de limitation intérieur 50.

Ainsi, chaque insert de denture 120 peut être fabriqué en un matériau à haute résistance mécanique et avec des tolérances faibles, tout en maintenant le cout global du limiteur de couple acceptable. Le couple maximal pouvant être transmis par le limiteur de couple peut ainsi également être facilement adapté. Chaque insert de denture 120 est par exemple en acier hautement allié, ayant de préférence subi un traitement de surface tel que la nitruration, la cémentation ou la trempe.

Avantageusement, le nombre d'inserts de denture 120 et le nombre d'éléments de maintien de limitation intérieur 50 du limiteur de couple 14 est identique.

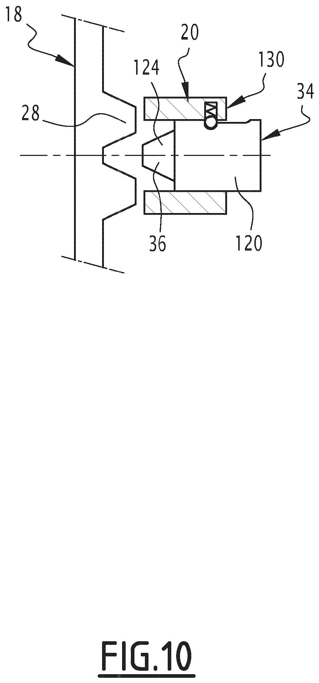

Les moyens de blocage 38 comprennent des moyens d'encliquetage 130, tels qu'une rainure axiale à extrémité renfoncée ménagée dans l'insert de denture 120 et un organe d'encliquetage, telle qu'une bille (voir Figure 10).

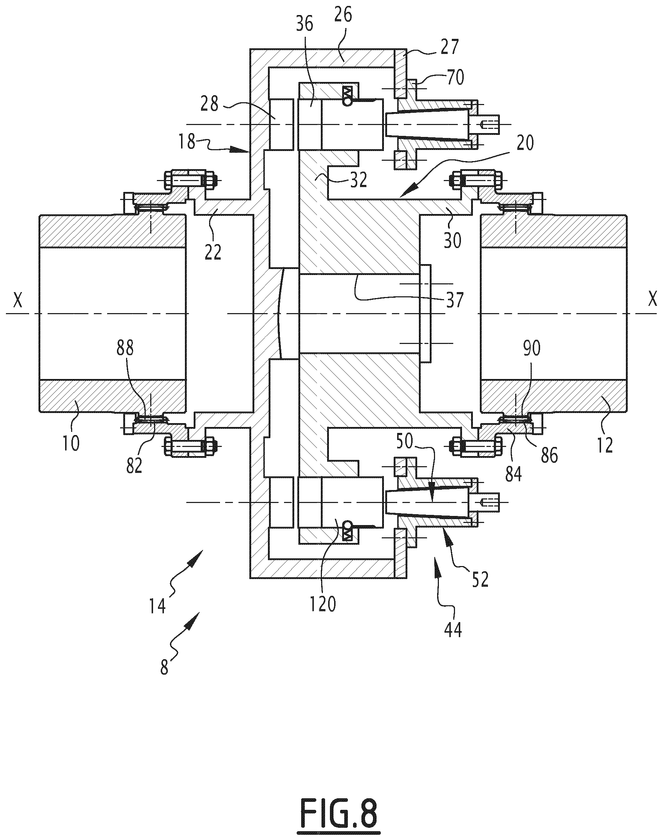

La Figure 8 montre l'installation de la Figure 7, le limiteur de couple 14 étant dans la configuration de libération. Tous les inserts de denture 120 sont écartés de la première denture de limiteur 36.

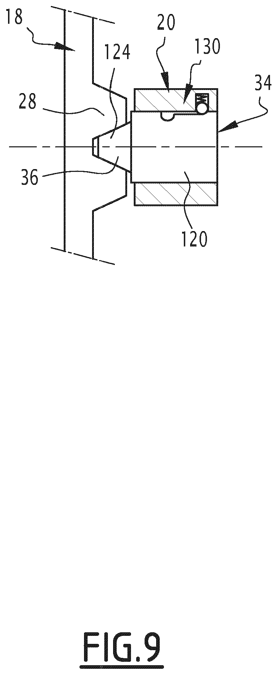

Sur les Figures 9 et 10 est montré un détail du limiteur de couple 14 selon une vue radiale. On voit une portion du premier corps 18, une portion du second corps 20, une partie de la première denture de limiteur 28 et un insert de denture 120.

De manière générale, les première et seconde dentures de limiteur 28, 36 peuvent avoir une forme quelconque, pour autant qu'elles soient adaptées pour générer la force axiale sollicitant les première et seconde dentures de limiteur 28, 36 ou le premier corps 18 et le second corps 20 de leur configuration engagée vers leur configuration de libération sous l'effet du couple de rotation transmis. La première et seconde dentures de limiteur 28, 36 peuvent par exemple être des dentures obliques. La première et seconde dentures de limiteur 28, 36 peuvent avoir un profil régulier ou répétitif ou encore irrégulier et non-répétitif. En variante, le limiteur de couple 14 peut comprendre des corps de limitation, telles que des billes ou des rouleaux, interposés entre les première et seconde dentures de limiteur 28, 36.

La description qui précède contient des caractéristiques techniques de l'invention. Ces caractéristiques techniques, bien que présentées dans un contexte technique et éventuellement en combinaison avec d'autres caractéristiques techniques, peuvent être utilisées à chaque fois individuellement, sans les autres caractéristiques techniques, pour autant que ceci soit techniquement possible.

## Revendications

1. Limiteur de couple (14), du type comportant
- un premier corps (18), et
- un second corps (20),
le premier corps et le second corps s'étendant autour d'un axe central (X-X),
le premier corps portant une première denture de limiteur (28)
le second corps portant une seconde denture de limiteur (36), complémentaire de la première denture de limiteur, les première denture de limiteur et seconde denture de limiteur définissant
une configuration engagée dans laquelle les première denture de limiteur et seconde denture de limiteur sont adaptées pour transmettre un couple de rotation autour de l'axe central du premier corps au second corps et
une configuration de libération, dans laquelle les première denture de limiteur (28) et seconde denture de limiteur (36) sont inaptes à transmettre un couple de rotation entre le premier corps et le second corps,
le limiteur de couple comprenant également
des moyens de blocage (38) adaptés pour s'opposer à une transition de la première denture de limiteur (28) et de la seconde denture de limiteur (36) de leur configuration de libération vers leur configuration engagée, et
des moyens de maintien de limitation (44) adaptés pour maintenir la première denture de limiteur (28) et la seconde denture de limiteur (36) dans leur configuration engagée lorsque le couple de rotation est inférieur à un couple de transmission limite et adaptés pour céder lorsque le couple de rotation dépasse le couple de transmission limite,
**caractérisé en ce que**
les moyens de maintien de limitation comprennent
au moins un élément de maintien de limitation intérieur (50) ayant une surface de contact extérieure (56), et
au moins un élément de maintien de limitation extérieur (52) ayant une surface de contact intérieure (58) complémentaire de la surface de contact extérieure,
les éléments de maintien de limitation intérieur (50) et extérieur (52) ayant
- une configuration de maintien, dans laquelle l'élément de maintien de limitation intérieur est serré dans l'élément de maintien de limitation extérieur, et
- une configuration cédée dans laquelle l'élément de maintien de limitation intérieur (50) est desserré de l'élément de maintien de limitation extérieur (52).

2. Limiteur de couple selon la revendication 1, dans lequel la surface de contact extérieure (56) est de forme tronconique de révolution et dans lequel surface de contact intérieure (58) est de forme tronconique de révolution, notamment dans lequel l'angle d'ouverture (α) des surfaces de contact extérieure et intérieure est compris entre 1° et 20°.

3. Limiteur de couple selon la revendication 1 ou 2, dans lequel les moyens de maintien de limitation (44) comprennent au moins une cartouche (60), chaque cartouche comprenant un de l'au moins un élément de maintien de limitation extérieur (52) et un de l'au moins élément de maintien de limitation intérieur (50),
dans lequel l'élément de maintien de limitation extérieur est un manchon (62), et
dans lequel élément de maintien de limitation intérieur est un poinçon (66) muni d'un piston (68), en particulier le piston étant adapté pour s'étendre à travers une ouverture du couvercle à ouverture (64) de la cartouche (60).

4. Limiteur de couple selon l'une quelconque des revendications précédentes, dans lequel lorsque l'élément de maintien de limitation intérieur (50) et l'élément de maintien de limitation extérieur (52) sont dans la configuration cédée, l'élément de maintien de limitation intérieur est décalé selon l'axe central (X-X) relatif à l'élément de maintien de limitation extérieur par rapport à leur configuration de maintien.

5. Limiteur de couple selon l'une quelconque des revendications précédentes, dans lequel, dans leur configuration engagée, la première denture (28) et la seconde denture (36) s'appliquent l'une sur l'autre.

6. Limiteur de couple selon l'une quelconque des revendications précédentes, dans lequel le limiteur de couple comprend
- une première bride d'accouplement (80) fixée au premier corps et munie d'une première denture d'accouplement (82), et
- une seconde bride d'accouplement (84) fixée au second corps et munie d'une seconde denture d'accouplement (86), et dans lequel
la première denture d'accouplement (82) est adaptée pour coopérer avec une denture d'accouplement complémentaire (88), et
la seconde denture d'accouplement (86) est adaptée pour coopérer avec une denture d'accouplement complémentaire (90).

7. Limiteur de couple selon l'une quelconque des revendications précédentes, dans lequel
soit la seconde denture de limiteur (36) est fixe par rapport au second corps (20),
soit la seconde denture de limiteur (36) comprend des inserts de denture (120) axialement mobiles par rapport au second corps (20) entre la configuration engagée et la configuration de libération.

8. Limiteur de couple selon l'une quelconque des revendications précédentes, dans lequel le second corps (20) comprend deux pièces de corps (100, 102) axialement mobiles l'une par rapport à l'autre et fixes en rotation l'une de l'autre autour de l'axe central (X-X).

9. Ensemble de transmission (8), du type comprenant
- un arbre meneur (10),
- un arbre mené (12), et
- un limiteur de couple, **caractérisé en ce que**
le limiteur de couple est un limiteur de couple (14) selon l'une quelconque des revendications précédentes, **en ce que**
le premier corps (18) est fixé en rotation à l'arbre meneur, et
le second corps (20) est fixé en rotation à l'arbre mené.

10. Ensemble de transmission selon la revendication 9, dans lequel l'arbre meneur (10) comprend une denture d'accouplement complémentaire (88) et l'arbre mené (12) comprend une denture d'accouplement complémentaire (90) et dans lequel le limiteur de couple (14) est un limiteur de couple selon au moins la revendication 6.

11. Utilisation d'un ensemble de transmission selon la revendication 9 ou 10, comprenant les étapes successives suivantes :
fourniture de l'ensemble de transmission (8), les éléments de maintien de limitation intérieur et extérieur étant dans leur configuration cédée ;
mise des éléments de maintien de limitation intérieur et extérieur dans leur configuration de maintien en appliquant la surface de contact extérieure sur la surface de contact intérieure, en serrant l'élément de maintien de limitation intérieur dans l'élément de maintien de limitation extérieur.

12. Utilisation selon la revendication 11, comprenant en outre les étapes successives suivantes, mises en oeuvre après l'étape de mise des éléments de maintien de limitation intérieur et extérieur dans leur configuration de maintien :
- dépassement du couple de transmission limite, ainsi causant la mise en configuration de libération des première denture de limiteur (28) et seconde denture de limiteur (36),
- re-enclenchement du limiteur de couple (14) par une mise des éléments de maintien de limitation intérieur et extérieur dans leur configuration de maintien en appliquant la surface de contact extérieure sur la surface de contact intérieure, ainsi serrant l'élément de maintien de limitation intérieur dans l'élément de maintien de limitation extérieur.

## Patentansprüche

1. Drehmomentbegrenzer (14), umfassend
- einen ersten Körper (18), und
- einen zweiten Körper (20),
wobei sich der erste Körper und der zweite Körper um eine Mittelachse (X-X) erstrecken,
der erste Körper eine erste Begrenzerverzahnung (28) trägt,
der zweite Körper eine zweite Begrenzerverzahnung (36) trägt, die komplementär zu der ersten Begrenzerverzahnung ist, wobei die erste Begrenzerverzahnung und die zweite Begrenzerverzahnung Folgendes definieren
eine eingegriffene Konfiguration, bei der die erste Begrenzerverzahnung und die zweite Begrenzerverzahnung angepasst sind, um ein Drehmoment um die Mittelachse des ersten Körpers auf den zweiten Körper zu übertragen, und
eine Freigabekonfiguration, bei der die erste (28) und die zweite Begrenzerverzahnung (36) nicht angepasst sind, um ein Drehmoment zwischen dem ersten Körper und dem zweiten Körper zu übertragen,
der Drehmomentbegrenzer auch umfassend
eine Sperreinrichtung (38), die angepasst ist, um einem Übergang der ersten Begrenzerverzahnung (28) und der zweiten Begrenzerverzahnung (36) aus ihrer Freigabekonfiguration in ihre eingegriffene Konfiguration entgegenzuwirken, und
Begrenzungshalteeinrichtungen (44), die angepasst sind, um die erste Begrenzerverzahnung (28) und die zweite Begrenzerverzahnung (36) in ihrer eingegriffenen Konfiguration zu halten, wenn das Drehmoment niedriger als ein Grenzübertragungsdrehmoment ist, und angepasst sind, um nachgeben, wenn das Drehmoment das Grenzübertragungsdrehmoment übersteigt,
**dadurch gekennzeichnet, dass**
die Begrenzungshalteeinrichtungen Folgendes umfassen
mindestens ein inneres Begrenzungshalteelement (50), das eine äußere Kontaktfläche (56) aufweist, und
mindestens ein äußeres Begrenzungshalteelement (52) , das eine innere Kontaktfläche (58) aufweist, die komplementär zu der äußeren Kontaktfläche ist, wobei das innere (50) und das äußere (52) Begrenzungshalteelement Folgendes aufweisen
- eine Haltekonfiguration, in der das innere Begrenzungshalteelement in das äußere Begrenzungshalteelement eingespannt ist, und
- eine nachgegebene Konfiguration, in der das innere Begrenzungshalteelement (50) von dem äußeren Begrenzungshalteelement (52) gelöst ist.

2. Drehmomentbegrenzer nach Anspruch 1, wobei die äußere Kontaktfläche (56) rotationskegelstumpfförmig ist und wobei die innere Kontaktfläche (58) rotationskegelstumpfförmig ist, insbesondere wobei der Öffnungswinkel (α) der äußeren und der inneren Kontaktfläche zwischen 1° und 20° liegt.

3. Drehmomentbegrenzer nach Anspruch 1 oder 2, wobei die Begrenzungshalteeinrichtungen (44) mindestens eine Kartusche (60) umfassen, jede Kartusche umfassend eines von dem mindestens einen äußeren Begrenzungshalteelement (52) und eines von dem mindestens einen inneren Begrenzungshalteelement (50),
das äußere Begrenzungshalteelement eine Hülse (62) ist, und
wobei das innere Begrenzungshalteelement ein Stempel (66) ist, der mit einem Kolben (68) versehen ist, insbesondere wobei der Kolben angepasst ist, um sich durch eine Öffnung des öffnungsfähigen Deckels (64) der Kartusche (60) zu erstrecken.

4. Drehmomentbegrenzer nach einem der vorherigen Ansprüche, wobei, wenn das innere Begrenzungshalteelement (50) und das äußere Begrenzungshalteelement (52) in der nachgegebenen Konfiguration sind, das innere Begrenzungshalteelement entlang der Mittelachse (X-X) in Bezug auf das äußere Begrenzungshalteelement aus ihrer Haltekonfiguration verschoben ist.

5. Drehmomentbegrenzer nach einem der vorherigen Ansprüche, wobei die erste Verzahnung (28) und die zweite Verzahnung (36) in ihrer eingegriffenen Konfiguration aneinander anliegen.

6. Drehmomentbegrenzer nach einem der vorherigen Ansprüche, wobei der Drehmomentbegrenzer Folgendes umfasst
- einen ersten Kupplungsflansch (80), der an dem ersten Körper befestigt und mit einer ersten Kupplungsverzahnung (82) versehen ist, und
- einen zweiten Kupplungsflansch (84), der an dem zweiten Körper befestigt und mit einer zweiten Kupplungsverzahnung (86) versehen ist und wobei
die erste Kupplungsverzahnung (82) angepasst ist, um mit einer komplementären Kupplungsverzahnung (88) zusammenzuwirken, und
die zweite Kupplungsverzahnung (86) angepasst ist, um mit einer komplementären Kupplungsverzahnung (90) zusammenzuwirken.

7. Drehmomentbegrenzer nach einem der vorherigen Ansprüche, wobei
die zweite Begrenzerverzahnung (36) in Bezug auf den zweiten Körper (20) feststehend ist,
oder die zweite Begrenzerverzahnung (36) Verzahnungseinsätze (120) umfasst, die in Bezug auf den zweiten Körper (20) zwischen der eingegriffenen Konfiguration und der Freigabekonfiguration axial bewegbar sind.

8. Drehmomentbegrenzer nach einem der vorherigen Ansprüche, wobei der zweite Körper (20) zwei Körperteile (100, 102) umfasst, die in Bezug aufeinander axial bewegbar und gegeneinander um die Mittelachse (X-X) drehfest sind.

9. Übertragungsanordnung (8), des Typs, umfassend
- eine antreibende Welle (10),
- eine angetriebene Welle (12), und
- einen Drehmomentbegrenzer, **dadurch gekennzeichnet, dass**
der Drehmomentbegrenzer ein Drehmomentbegrenzer (14) nach einem der vorherigen Ansprüche ist, **dadurch gekennzeichnet, dass**
der erste Körper (18) drehfest an der antreibenden Welle befestigt ist, und
der zweite Körper (20) drehfrest an der angetriebenen Welle befestigt ist.

10. Getriebeanordnung nach Anspruch 9, wobei die antreibende Welle (10) eine komplementäre Kupplungsverzahnung (88) und die angetriebene Welle (12) eine komplementäre Kupplungsverzahnung (90) umfasst und wobei der Drehmomentbegrenzer (14) ein Drehmomentbegrenzer nach mindestens Anspruch 6 ist.

11. Verwendung einer Übertragungsanordnung nach Anspruch 9 oder 10, umfassend die folgenden aufeinanderfolgenden Schritte:
Bereitstellen der Getriebeanordnung (8), wobei sich das innere und das äußere Begrenzungshalteelement in ihrer nachgegebenen Konfiguration sind;
Bringen des inneren und des äußeren Begrenzungshalteelements in ihre Haltekonfiguration durch Anlegen der äußeren Kontaktfläche an die innere Kontaktfläche, wobei das innere Begrenzungshalteelement in das äußere Begrenzungshalteelement eingespannt wird.

12. Verwendung nach Anspruch 11, ferner umfassend die folgenden aufeinanderfolgenden Schritte, die nach dem Schritt eines Bringens des inneren und des äußeren Begrenzungshalteelements in ihre Haltekonfiguration durchgeführt werden:
- Überschreiten des Grenzübertragungsdrehmoments, wodurch bewirkt wird, dass die erste Begrenzungsverzahnung (28) und die zweite Begrenzungsverzahnung (36) in eine Freigabekonfiguration gebracht werden,
- Wiedereinschalten des Drehmomentbegrenzers (14) durch Bringen des inneren und des äußeren Begrenzungshalteelements in ihre Haltekonfiguration durch Anlegen der äußeren Kontaktfläche an die innere Kontaktfläche, wodurch das innere Begrenzungshalteelement in das äußere Begrenzungshalteelement eingespannt wird.

## Claims

1. A torque limiter (14), of the type including
- a first body (18), and
- a second body (20),
the first body and the second body extending around a central axis (X-X),
the first body supporting first limiter teeth (28)
the second body supporting second limiter teeth (36) mating with the first limiter teeth, the first limiter teeth and the second limiter teeth defining
an engaged configuration wherein the first limiter teeth and the second limiter teeth are suitable for transmitting a torque about the central axis of the first body to the second body and
a release configuration, wherein the first limiter teeth (28) and the second limiter teeth (36) are inapt to transmit a torque between the first body and the second body,
the torque limiter further comprising
locking means (38) suitable for opposing a transition of the first limiter teeth (28) and of the second limiter teeth (36) from the release configuration thereof to the engaged configuration, and
limited-retaining means (44) suitable for retaining the first limiter teeth (28) and the second limiter teeth (36) in the engaged configuration thereof when the torque is less than a transmission torque limit and suitable for yielding when the torque exceeds the transmission torque,
**characterized in that**
the limited-retaining means comprise
at least one inner limited-retaining element (50) having an outer contact surface (56), and
at least one outer limited-retaining element (52) having an inner contact surface (58) mating with the outer contact surface,
the inner (50) and outer (52) limited-retaining elements having
- a retaining configuration, wherein the inner limited-retaining element is clamped into the outer limited-retaining element, and
- a yielded configuration wherein the inner limited-retaining element (50) is loosened from the outer limited-retaining element (52).

2. The torque limiter according to claim 1, wherein the outer contact surface (56) has a frustoconical shape of revolution and wherein the inner contact surface (58) has a frustoconical shape of revolution, in particular wherein the opening angle (α) of the outer and inner contact surfaces is comprised between 1° and 20°.

3. The torque limiter according to claim 1 or 2, wherein the limited-retaining means (44) comprise at least one cartridge (60), each cartridge comprising one of the at least one outer limited-retaining element (52) and one of the at least one inner limited-retaining element (50),
wherein the outer limited-retaining element is a sleeve (62), and
wherein the inner limited-retaining element is a punch (66) provided with a piston (68), more particularly the piston being suitable for extending through an opening of the cover with an opening (64) of the cartridge (60).

4. The torque limiter according to any of the preceding claims, wherein when the inner limited-retaining element (50) and the outer limited-retaining element (52) are in the yielded configuration, the inner limit holder is offset along the central axis (X-X) relative to the outer limit holder relative to the retaining configuration thereof.

5. The torque limiter according to any of the preceding claims, wherein in the engaged configuration thereof, the first teeth (28) and the second teeth (36) press against one another.

6. The torque limiter according to any preceding claim, wherein the torque limiter comprises
- a first coupling flange (80) fastened to the first body and provided with first coupling teeth (82), and
- a second coupling flange (84) fastened to the second body and equipped with second coupling teeth (86), and wherein
the first coupling teeth (82) being suitable for cooperating with mating coupling teeth (88), and
the second coupling teeth (86) being suitable for cooperating with mating coupling teeth (90).

7. The torque according to any of the preceding claims, wherein
either the second limiter teeth (36) are fixed in relation to the second body (20),
or the second limiter teeth (36) comprises teeth inserts (120) axially movable relative to the second body (20) between the engaged configuration and the release configuration.

8. The torque limiter according to any of the preceding claims, wherein the second body (20) comprises two body parts (100, 102) axially movable relative to each other and fixed in rotation relative to each other about the central axis (X-X).

9. A transmission assembly (8) of the type comprising
- a drive shaft (10),
- a driven shaft (12), and
- a torque limiter, **characterized in that**
the torque limiter is a torque limiter (14) according to any of the preceding claims, and **in that**
the first body (18) is fixed in rotation to the drive shaft, and
the second body (20) is fixed in rotation to the driven shaft.

10. The transmission assembly according to claim 9, wherein the drive shaft (10) comprises mating coupling teeth (88) and the driven shaft (12) comprises mating coupling teeth (90) and wherein the torque limiter (14) is a torque limiter according to at least claim 6.

11. A use of the transmission assembly according to claim 9 or 10, comprising the successive steps of:
supply of the transmission assembly (8), with the inner and outer limited-retaining elements being in the yielded configuration thereof;
setting the inner and outer limited-retaining elements into the retaining configuration thereof by applying the outer contact surface to the inner contact surface, clamping the inner limited-retaining element into the outer limited-retaining element.

12. The use according to claim 11, further comprising the following successive steps, carried out after the step of placing the inner and outer limited-retaining elements in the retaining configuration thereof:
- exceeding the transmission torque limit, thereby leading to setting the first limiter teeth (28) and the second limiter teeth in the release configuration (36),
- meshing of the torque limiter (14) by placing the inner and outer limited-retaining elements in the retaining configuration thereof by applying the outer contact surface to the inner contact surface, thereby clamping the inner limited-retaining element into the outer limited-retaining element.
